# EUROPEAN PATENT APPLICATION

(11) **EP 4 663 521 A1**
(43) Date of publication of application: **17.12.2025**
(21) Application number: 24181774.1
(22) Date of filing: 12.06.2024
(51) Int. Cl.: B62D 35/00, B60R 19/16, B60R 19/56

(54) **A CHASSIS FAIRING SYSTEM FOR A VEHICLE**

(71) Applicant: VOLVO TRUCK CORPORATION, 405 08 Göteborg (SE)
(72) Inventor: MITTAL, Tanmay, 560066 Bangalore (IN)
(74) Representative: Ström & Gulliksson AB

(57) **Abstract**

A chassis fairing system for a vehicle (10) is provided. The system comprises at least one side fairing (100a, 100b) arranged to be affixed to a longitudinal side (13) of the vehicle (10), and a plurality of vertically arranged shock absorbing rollers (140a-f) that are at least partly embedded in a body (110) of the at least one side fairing (100a, 100b). A vehicle is also provided.

## Description

### TECHNICAL FIELD

The disclosure relates generally to vehicles. In particular aspects, the disclosure relates to a chassis fairing system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Different kinds of chassis fairing systems are commonly used on heavy-duty vehicles. The chassis fairings are preferably aerodynamic panels arranged on the sides and rear of the chassis of the vehicle. The fairings commonly smooths the airflow around the vehicle and thus reduces the aerodynamic drag. However, there is always room for improvements in the field of chassis fairing systems.

### SUMMARY

According to a first aspect of the disclosure, a chassis fairing system for a vehicle, comprising at least one side fairing arranged to be affixed to a longitudinal side of the vehicle, and a plurality of vertically arranged rollers that are at least partly embedded in a body of the at least one side fairing. The first aspect of the disclosure may seek to improve the safety during side impacts and rollover events. A technical benefit may include that the chassis fairing system mitigates the impact of accidents by having the vertical rollers that absorb and distribute energy, thereby enhancing the safety of the vehicle and its occupants during side collisions and rollover incidents.

Optionally in some examples, including in at least one preferred example, the plurality of rollers are vertically arranged side by side of each other in a series extending along the longitudinal side of the vehicle. A technical benefit may include that the energy is distributed over a greater area.

Optionally in some examples, including in at least one preferred example, the plurality of rollers are arranged in a spaced apart relation relative to each other. A technical benefit may include that the energy is effectively distributed by allowing each roller to rotate during impact.

Optionally in some examples, including in at least one preferred example, the at least one side fairing is arranged to be affixed to a lower peripheral edge of the vehicle.

Optionally in some examples, including in at least one preferred example, the at least one side fairing comprises an outer surface and an inner surface creating the body in which the plurality of rollers are at least partly arranged.

Optionally in some examples, including in at least one preferred example, the plurality of rollers are partly protruding out of the outer surface of the at least one side fairing.

Optionally in some examples, including in at least one preferred example, the plurality of rollers are fully embedded in the body of the at least one side fairing.

Optionally in some examples, including in at least one preferred example, the vehicle is an electric or semi-electric vehicle having at least one battery pack arranged on the longitudinal side of the vehicle, and wherein the at least one side fairing is arranged to protect the at least one battery pack. A technical benefit may include that the system provides a shield for the side-mounted battery pack, safeguarding it from impact forces and external elements during accidents. The energy-absorbing characteristics of the vertical rollers reduce impact forces on the battery, preventing potential damage and maintaining its safety. A further technical benefit may include that the risk of fire hazards and explosions are minimized due to the improved protection of the battery packs.

Optionally in some examples, including in at least one preferred example, the vehicle is a hydrogen operated vehicle having at least one hydrogen storage unit arranged on the longitudinal side of the vehicle, and wherein the at least one side fairing is arranged to protect the at least one hydrogen storage unit. A technical benefit may include that the system provides a shield for the side-mounted hydrogen storage unit, safeguarding it from impact forces and external elements during accidents.

Optionally in some examples, including in at least one preferred example, the plurality of rollers are cylindrical rollers.

Optionally in some examples, including in at least one preferred example, the plurality of rollers are configured to rotate upon an external impact force. A technical benefit may include an effective energy distribution.

Optionally in some examples, including in at least one preferred example, the plurality of rollers are made of hard rubber, steel or hard plastic. A technical benefit may include an effective energy distribution.

According to a first aspect of the disclosure, a vehicle comprising a chassis fairing system is provided. The chassis fairing system comprises at least one side fairing affixed to a longitudinal side of the vehicle, and a plurality of vertically arranged shock absorbing rollers being at least partly embedded in the at least one side fairing.

Optionally in some examples, including in at least one preferred example, the vehicle further comprises at least one battery pack arranged on the longitudinal side of the vehicle and wherein the at least one side fairing is arranged to protect said at least one battery pack.

Optionally in some examples, including in at least one preferred example, the vehicle is a truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary side view of a vehicle according to an example.
**FIGS. 2A-C** are exemplary top views of a vehicle according to examples.
**FIGS. 3A-B** are exemplary top views of a vehicle with a chassis fairing system according to an example.
**FIGS. 4A-B** are exemplary top views of a chassis fairing system according to examples.
**FIGS. 5A-B** are exemplary top views of a chassis fairing system according to examples.
**FIG. 6** is a schematic side view of a vehicle with a chassis fairing system according to an example.
**FIGS. 7A-B** are exemplary views of a chassis fairing system according to examples, where **FIGS. 7A-B** are side views and **FIG. 7C** is a cross-sectional view.
**FIGS. 8A-D** are exemplary side views of a chassis fairing system according to examples.

### DETAILED DESCRIPTION

The detailed description set forth below provides information and examples of the disclosed technology with sufficient detail to enable those skilled in the art to practice the disclosure.

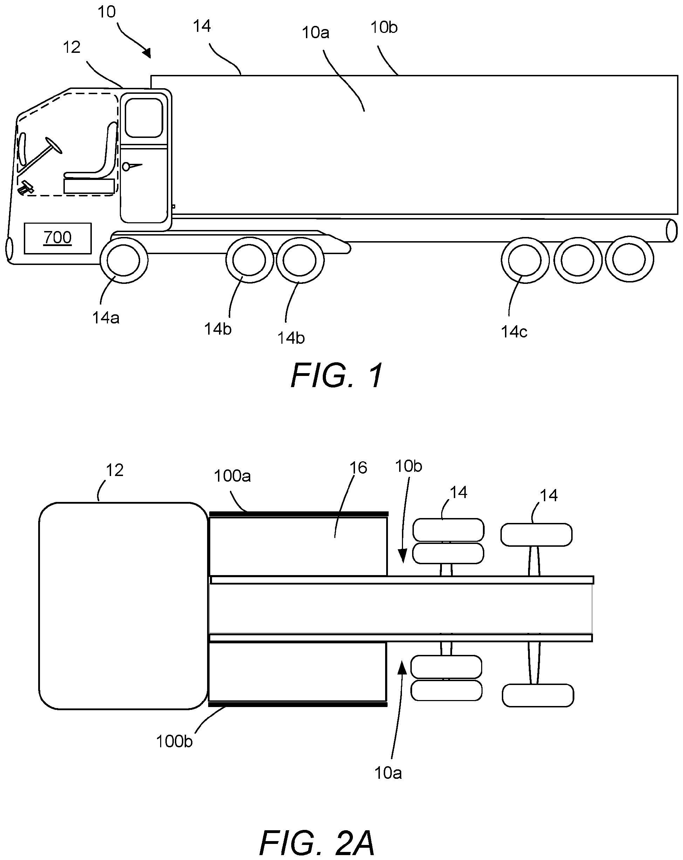

**FIG. 1A** is an exemplary schematic illustration of a vehicle **10.** The vehicle **10** is illustrated as a heavy-duty vehicle, but other vehicle types may be used. The vehicle **10** in **FIG. 1** is shown from a first side **10a,** and includes a corresponding second side **10b** at an opposing side. This vehicle **10** comprises a tractor unit **12** which is arranged to tow a trailer unit **14.**

The vehicle **1** is supported by wheels **14,** where each wheel comprises a tire. The tractor unit **12** has front wheels **14a** which are normally steered, and rear wheels **14b** of which at least one pair are driven wheels. Generally, the rear wheels of the tractor **12** may be mounted on tag or pusher axles. A tag axle is where the rear-most drive axle is non-powered, also referred to as a free-rolling or dead axle. A pusher axle is where the forward-most drive axle is not powered. The trailer unit **14** is supported on trailer wheels **14c.** Trailers with driven wheels, and even a steered axle, are also possible.

The vehicle **10** may further comprises a computer system **700.** The computer system **700** is advantageously operatively connected to all suitable devices, systems and features of the vehicle **10.**

The vehicle **10** may of course also comprise additional vehicle units not explicitly shown in the visualization of **FIG. 1****,** such as one or more dolly units and/or additional trailer units. Although the vehicle **10** is illustrated as a tractor unit **12,** it should be realized that other types of vehicles may be equally considered for the purpose of the herein described method such as buses, construction equipment, trucks, etc. In other examples, other heavy-duty vehicles may be employed, e.g., trucks, buses, and construction equipment. The vehicle **10** comprises vehicle units and associated functionality as would be understood and expected by a skilled person, such as a powertrain, chassis, and various control systems.

**FIGS. 2A-C** are exemplary schematic illustrations of different examples of a vehicle **10** from a top view perspective.

The vehicle **10** of **FIG. 2A** is a vehicle being driven by an internal combustion engine, in other words an internal combustion engine vehicle.

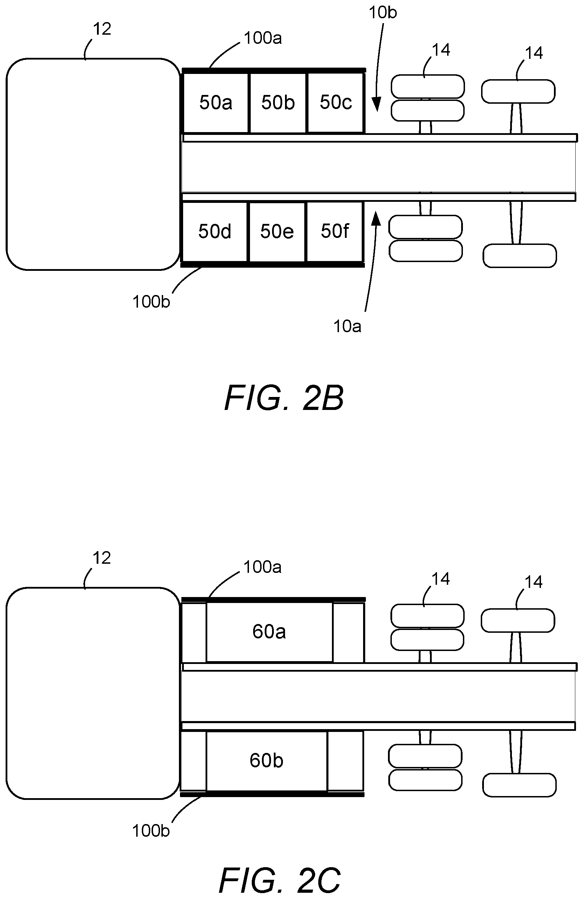

The vehicle **10** of **FIG. 2B** is an electrically driven vehicle (i.e. a fully electric vehicle) or a hybrid vehicle (i.e. the driving force is either provided by an electric motor, an internal combustion engine, or both). Within the context of this disclosure, both types are considered being electric vehicles. The vehicle **10** is arranged with one or more battery cells arranged to form one or more battery packs **50a-f.** A specific number of battery cells are arranged in a battery module, and a plurality of battery modules form a battery pack **50a-f.** The one or more battery packs **50a-f** form an energy storage system.

The vehicle **10** of **FIG. 2C** is a hydrogen vehicle, also referred to as a hydrogen fuel cell vehicle that least in part is driven by hydrogen gas. The vehicle is thus arranged with at least one hydrogen storage unit **60a, 60b.** The hydrogen storage unit may be in the form of a tank. The hydrogen is preferably stored at high pressure. The vehicle is further arranged with fuel cell stack. In one example, the hydrogen cell stack comprises a plurality of individual fuel cells. The cells are configured to convert hydrogen gas and oxygen from the air into electricity through an electrochemical reaction. The electric current generated by the fuel cell stacks powers the electric motor of the vehicle.

In one example, the vehicle is a liquefied natural gas vehicle. A liquefied natural gas vehicle is driven by liquefied natural gas. The vehicle is thus arranged with natural gas storage unit. The vehicle is further arranged with one or more battery packs.

The vehicles **10** of **FIGS. 2A-C** are all arranged with a chassis fairing system arranged with at least one side fairing. In **FIGS. 2A-C****,** the vehicle is arranged with a chassis fairing system comprising at least two side fairings **100a, 100b** arranged to be affixed to the first and second sides **10a, 10b** of the vehicle. The first and second sides **10a, 10b** are preferably the longitudinal side of the vehicle **10.**

Although not shown, the chassis fairing system may further comprise a rear fair fairing. The chassis fairings are preferably aerodynamic panels arranged on the sides and rear of the chassis of the vehicle. The fairings smooths the airflow around the vehicle and thus reduces the aerodynamic drag.

In **FIG. 2A** the chassis fairing system is arranged to cover a side structure **16** of the vehicle. The side structure **16** of the vehicle may comprise different kinds of units, such as for example a storage unit.

In **FIG. 2B** the chassis fairing system is arranged to cover a side structure **16** of the vehicle **10.** In this example, the side structure **16** of the vehicle comprises a plurality of battery packs **50a-f.** Hence, in this example the chassis fairing system is arranged to cover a plurality of battery packs **50a-f.**

In **FIG. 2C** the chassis fairing system is arranged to cover a side structure **16** of the vehicle **10.** In this example, the side structure **16** of the vehicle **10** comprises at least one hydrogen storage unit **60a, 60b.** Hence, in this example the chassis fairing system is arranged to cover at least one hydrogen storage unit **60a, 60b.**

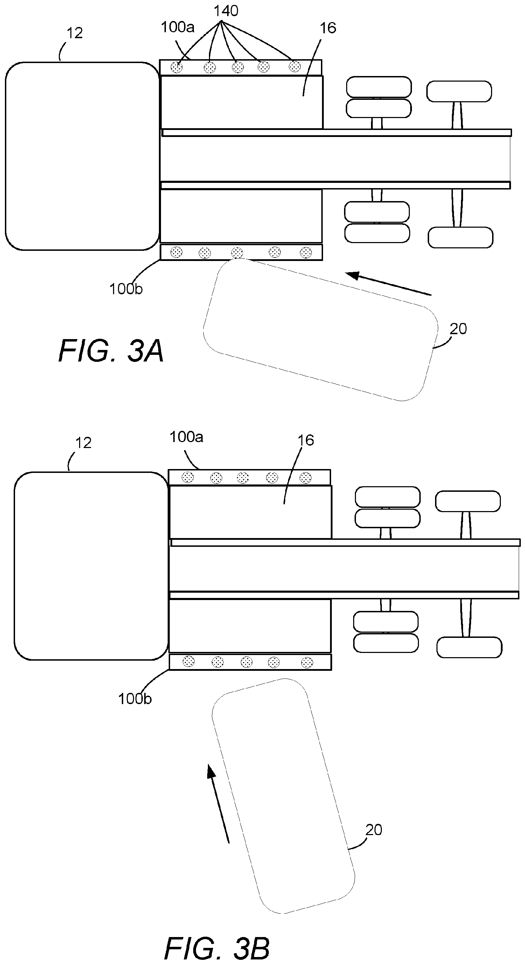

The inventors of the present invention have realized that the chassis fairing system can be utilized to increase the safety of the vehicle **10** by adding a plurality of vertically arranged shock absorbing rollers **140a-f that** are at least partly embedded in a body of the at least one side fairing **100a, 100b.** Reference is now made to **FIGS. 3A-B** which show a heavy-duty vehicle **10** being in a collision with another vehicle **20,** where **FIG. 3A** illustrates the initial collision and **FIG. 3B** illustrates the rotation of the colliding vehicle **20** after touching the side fairings **100a, 100b.** The vehicle **10** being arranged with the novel side fairing **100a, 100b** increases the protection of side impacts and rollovers. This inventive system aims to mitigate the impact of accidents by using the fairings' innovative design to absorb and distribute energy, thereby enhancing the safety of the vehicle and its occupants during side collisions and rollover incidents. This inventive system further aims to protect the occupant in colliding vehicle.

The integration of modified chassis fairings system with embedded vertical rollers becomes even more important when considering vehicles equipped with side-mounted batteries attached to the frame, such as illustrated in **FIG. 2B****.** In such configurations, the protection provided by the chassis fairings becomes an important element in safeguarding not only the vehicle's structural integrity but also the integrity of the battery pack by effectively absorbing impact energy during side collisions and enhancing stability to reduce the impacts of rollovers. The innovative system plays an important role in ensuring the safety and longevity of both the vehicle and its integral battery system. The existing fairings offer limited protection against the forces generated during a side collision or rollover. Impact energy is often transmitted directly to the vehicle's frame and occupants, resulting in increased risk of injury and structural damage. When a commercial vehicle is equipped with a side-mounted battery pack attached to the frame, the vulnerabilities are further compounded. The placement of the battery on the side introduces additional challenges and concerns that demand attention. During a side impact, the battery pack becomes susceptible to damage. Current chassis fairings designs may not offer sufficient protection to the vital battery unit, potentially compromising its functionality, integrity, and safety. In a rollover scenario, the side-mounted battery is exposed to impact forces that could lead to damage or even rupture.

The side fairings **100a, 100b** having at least partially embedded vertical rollers **140a-f** addresses the above defined problems. The at least partly integrated vertical rollers absorb and distribute impact energy, reducing the severity of collisions and minimizing the risk of injury to occupants. The enhanced chassis fairings design provides a shield for the side-mounted battery pack, safeguarding it from impact forces and external elements during accidents. The energy-absorbing characteristics of the vertical rollers **140a-f** reduce impact forces on the battery, preventing potential damage and maintaining its safety. Incorporating this innovative chassis fairing system becomes especially important for vehicles with side battery pack.

Once a collision of a vehicle **10** occurs, such as with the vehicle **20,** the plurality of vertical rollers **140a-f** absorbs energy of the collision. When the collision occurs, the vertical rollers **140a-f** rotate and thus effectively distributing and dissipating impact forces over a larger surface area of the fairing. The rollers **140a-f** reduces the severity of impact on the vehicle's structure and occupants, minimizing the risk of injury and structural damage during side collisions. The rollers could also be referred to as impact rollers or shock absorbing rollers.

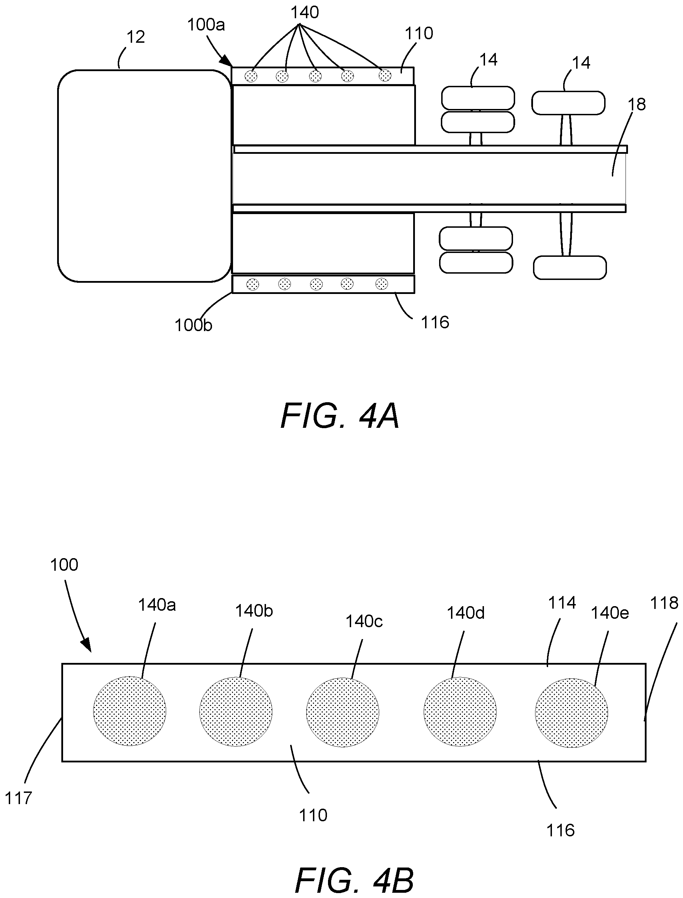

Turning to **FIGS. 4 -8****,** different examples of the chassis fairing system will be further described. **FIGS. 4A-B** are top views of a vehicle with a chassis fairing system (**FIG. 4A**) and part of a chassis fairing system **(****FIG. 4B****)** according to an example. The chassis fairing system in **FIG. 4A** comprises at least two side fairings **100a, 100b.** Each side fairing **100a, 100b** comprises a plurality of vertical rollers **140.** The fairing **100a, 100b** comprises an outer surface **116** and an inner surface **114.** The surfaces **114, 116** creates a body **110** in between. The vertical rollers **140** are at least partly embedded in the body **110.** The inner surface **114** is facing the inner structures of the vehicle **10** once arranged on the same. The outer surface **116** forms the outer surface of the chassis fairing system, and thus forms the outer surface of the vehicle **10** once it is arranged. The fairing **100a, 100b** further comprise a first edge **117** and a second edge **118,** arranged opposite of each other. In this example, the first edge **117** is facing the front part of the vehicle and the second edge **118** is facing the rear of the vehicle.

In **FIG. 4A****,** the plurality of vertical rollers **140** are fully embedded in the side fairing **100a, 100b** of the vehicle **10.** As is illustratively shown, the rollers are not protruding on the outer surface **116** of the side fairing **100a, 100b.** **FIG. 4B** is an enlargement where the verticall rollers **140a-e** are illustrated more in detail.

The plurality of rollers **140a-e** are vertically arranged side by side of each other. The rollers are arranged in a series that extends in the longitudinal direction of the vehicle **10.** The rollers are arranged in a spaced apart relation relative to each other.

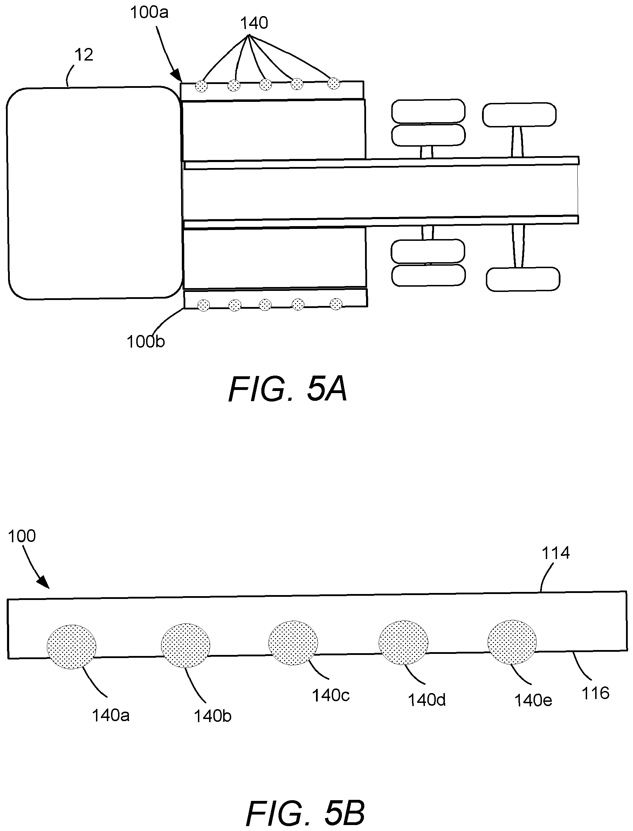

**FIGS. 5A-B** are top views of a vehicle with a chassis fairing system **(****FIG. 5A****)** and part of a chassis fairing system **(****FIG. 5B****)** according to an example.

In **FIG. 5A****,** the plurality of vertical rollers **140** are partly embedded in the side fairing **100a, 100b** of the vehicle **10.** As is illustratively shown, the rollers are protruding on the outer surface **116** of the side fairing **100a, 100b.** **FIG. 5B** is an enlargement where the vertically rollers **140a-e** are illustrated more in detail.

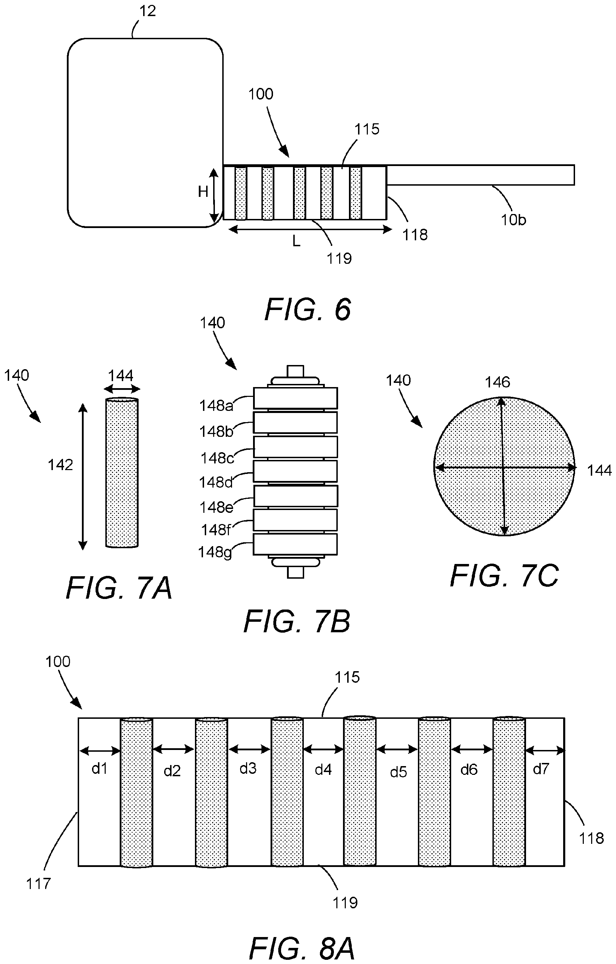

**FIG. 6** is an illustrative example of a vehicle **10** with a chassis fairing system in a side view. The side fairing **100** is shown in a side view, having a lower edge **119** and an upper edge **115.** The lower and upper edge **119, 115** are arranged opposite each other. In this example, the chassis fairing system comprises a side fairing **100** having a length **L.** The length may be in the range of 700 - 2800 mm. In one example, the number of vertical rollers **140** are dependent on the length **L** of the fairing **100.** In this specific example the number of vertical rollers **140** is five. However, as should be understood by a person skilled in the art, any number of vertical rollers could be present in the fairing **100.** In this example, the side fairing **100** has a height **H.** The height **H** may be in the range of 700 - 1000 mm. In one example, the height of vertical rollers **140** are dependent on the height **H** of the fairing **100.**

In one example, the side fairing **100** is made of steel. In one example, the steel is hot rolled or cold rolled. In one example the steel has yield strength in the range of 280 - 490 Mpa. In one example the side fairing **100** is made of a casted material. The casted material may be cast iron, carbon fiber, etc.

**FIGS. 7A-C** shows details of a single vertical roller **140** of a side view **(****FIG. 7A-****B)** and a top view **(****FIG. 7C****).** The vertical roller **140** has a height **142** and a width **144** in the longitudinal direction of the fairing **100.** The vertical roller **140** further has a depth or width **146.** The height **142** of the rollers may be in the range of 700 - 1000 mm. The width **144,** or dimension, of the rollers may be in the range of 20 - 100 mm. In this example, the roller **140** has the cross-sectional view of a circle. The rollers **140** are preferably cylindrical rollers.

The rollers **140** may be made of different kinds of material as long as it is configured to withstand the impact force and rotate during impact. In one example, the rollers are made of a hard rubber. In another example, the rollers are made of steel. The steel may for example be chrome manganese. In yet another example the rollers are made of a hard plastic. The hard plastic may for example be polyurethane.

The rollers **140 are** configured to rotate upon an external impact force. The rotation is along its axis. As illustrated in **FIG. 7B****,** the roller **140** may comprise of a plurality of smaller sections **148a-g** together forming the roller **140.** The sections **148a-g** may be seen as rings. In other words, the roller **140** may comprise a plurality of rings together forming the roller **140.**

**FIGS. 8A-D** illustrate different examples of a chassis fairing system. The different configurations may be preferable depending on the dimensions of the vehicle and/or the energy storage units that the fairings are covering. In **FIG. 8A** a side fairing **100** is shown comprising a plurality of vertical rollers. The rollers are vertically arranged side by side of each other in a series. The number of vertical rollers **140** is in this specific example is six. In this example the side fairing **100** comprises a first vertical roller **140a,** a second vertical roller **140b,** a third vertical roller **140c,** a fourth vertical roller **140d,** a fifth vertical roller **140e,** and a sixth vertical roller **140f.** The first vertical roller **140a** is arranged at a distance **d1** from the first side edge **117.** The second vertical roller **140b** is arranged at a distance **d2** from the first vertical roller **140a.** The third vertical roller **140c** is arranged at a distance **d3** from the second vertical roller **14b.** The fourth vertical roller **140d** is arranged at a distance **d4** from the third vertical roller **140c.** The fifth vertical roller **140e** is arranged at a distance **d5** from the fourth vertical roller **140d.** The sixth vertical roller **140f** is arranged at a distance **d6** from the first fifth roller **140e.** The sixth vertical roller **140f** is arranged at a distance **d7** from the second side edge **118.** The distances **d1** - **d7** may be the same, or be different from one another. The distance may for example be 50 - 400 mm.

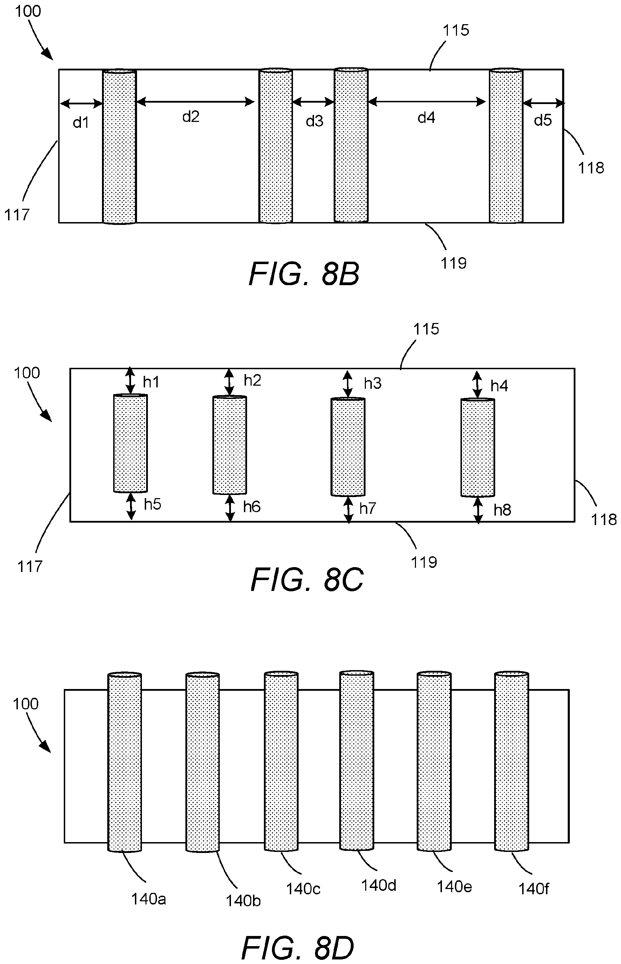

**FIG. 8B** shows an example where the distance **d2-d4** between the vertical rollers **140a-d** differ from each other. In this specific example, the distance between the first roller **140a** and the first side edge **17** is the same as the distance between the last roller and the second side edge **18.** In this specific example, the height of the vertical roller **140** is the same as the height **H** of the side fairing **100.**

**FIG. 8C** illustrates an example of a side fairing **100** where the vertical rollers **140** are arranged at a distance **h1** - **h4** from the upper edge **115** and at a distance **h5** - **h8** from the lower edge **119.** The distances **h1** - **h8** may be the same, or be different from one another. Hence, in this example the height of the vertical rollers **140** are shorter than the height of the fairing **100.**

**FIG. 8D** illustrates an example of a side fairing **100** where the vertical rollers **140** are arranged at a distance above the upper edge **115** and at a distance below the lower edge **119.** Hence, in this example the height of the vertical rollers **140a-f** are longer than the height of the fairing **100.** The vertical rollers **140a-f** are thus only partly embedded in the structure.

As have been shown in the examples of **FIGS. 2-8****,** the plurality of vertical rollers **140** are at least partly embedded in the structure of the side fairing **100.** The rollers **140** are preferably connected to the side fairing **100** using some kind of attachments. In one example, the vertical rollers may be embedded in the structure of the side fairing using a cage type structure. In one example, the vertical rollers may be embedded in the structure of the side fairing using an attachment at the top and bottom of the vertical rollers inside said side fairing.

The side fairing **100** may be affixed to a lower peripheral edge of the vehicle **10.** In one example, the side fairing **100** is fixed to the side of the vehicle so that it at least covers the energy storage system.

Example 1: A chassis fairing system for a vehicle **10,** comprising: at least one side fairing **100a, 100b** arranged to be affixed to a longitudinal side **10a, 10b** of the vehicle **10,** and a plurality of vertically arranged shock absorbing rollers 140a-f that are at least partly embedded in a body **110** of the at least one side fairing **100a, 100b.**

Example 2: The system of example 1, wherein the plurality of rollers **140** are vertically arranged side by side of each other in a series extending along the longitudinal side **10a, 10b** of the vehicle **10.**

Example 3: The system of any one of examples 1-2, wherein the plurality of rollers **140** are arranged in a spaced apart relation relative to each other.

Example 4: The system of any one of examples 1- 3, wherein the at least one side fairing **100a, 100b** is arranged to be affixed to a lower peripheral edge of the vehicle **10.**

Example 5: The system of any one of examples 1-4, wherein the at least one side fairing **100a, 100b** comprises an outer surface **116** and an inner surface **114** creating the body **110** in which the plurality of rollers **140** are at least partly arranged.

Example 6: The system of any one of examples 1- 5, wherein the plurality of rollers **140** are partly protruding out of the outer surface **116** of the at least one side fairing **100a, 100b.**

Example 7: The system of any one of examples 1-5, wherein the plurality of rollers **140** are fully embedded in the body **110** of the at least one side fairing **100a, 100b.**

Example 8: The system of any one of examples 1 - 7, wherein the vehicle **10** is an electric or semi-electric vehicle having at least one battery pack **50a-f** arranged on the longitudinal side **10a, 10b** of the vehicle **10,** and wherein the at least one side fairing **100a, 100b** is arranged to protect the at least one battery pack **50a-f.**

Example 9: The system of any one of examples 1 - 7, wherein the vehicle **10** is an hydrogen operated vehicle having at least one hydrogen storage unit **60a, 60b** arranged on the longitudinal side **10a, 10b** of the vehicle **10,** and wherein the at least one side fairing **100a, 100b** is arranged to protect the at least one hydrogen storage unit **60a, 60b.**

Example 10: The system of any one of examples 1 - 9, wherein the plurality of rollers **140** are cylindrical rollers.

Example 11: The system of any one of examples 1 - 10, wherein the plurality of rollers **140** are made of hard rubber, steel or hard plastic.

Example 12: The system of any one of examples 1-11, wherein the plurality of rollers **140** are configured to rotate upon an external impact force.

Example 13: A vehicle **10** comprising a chassis fairing system, the chassis fairing system comprising at least one side fairing **110** affixed to a longitudinal side **10a, 10b** of the vehicle **10,** and a plurality of vertically arranged shock absorbing rollers **140** being at least partly embedded in the at least one side fairing **110.**

Example 14: The vehicle **10** according to example 13, further comprises at least one battery pack **50a-f** arranged on the longitudinal side **10a, 10b** of the vehicle **10** and wherein the at least one side fairing **110** is arranged to protect said at least one battery pack **50a-f.**

Example 15: The vehicle **10** according to example 13, wherein the vehicle **10** is an hydrogen operated vehicle having at least one hydrogen storage unit **60a, 60b** arranged on the longitudinal side **10a, 10b** of the vehicle **10,** and wherein the at least one side fairing **100a, 100b** is arranged to protect the at least one hydrogen storage unit **60a, 60b.**

Example 16: The vehicle **10** according to example 13, wherein the vehicle is a liquefied natural gas vehicle (LNG) having at least one storage unit arranged on the longitudinal side **10a, 10b** of the vehicle **10,** and wherein the at least one side fairing **100a, 100b** is arranged to protect the at least one storage unit.

Example 17: The vehicle **10** according to any of example 13 to 16, wherein the vehicle **10** is a truck.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A chassis fairing system for a vehicle (10), comprising:
at least one side fairing (100a, 100b) arranged to be affixed to a longitudinal side (10a, 10b) of the vehicle (10), and
a plurality of vertically arranged rollers (140a-f) that are at least partly embedded in a body (110) of the at least one side fairing (100a, 100b).

2. The system of claim 1, wherein the plurality of rollers (140a-f) are vertically arranged side by side of each other in a series extending along the longitudinal side (10a, 10b) of the vehicle (10).

3. The system of any one of claims 1-2, wherein the plurality of rollers (140a-f) are arranged in a spaced apart relation relative to each other.

4. The system of any one of claims 1- 3, wherein the at least one side fairing (100a, 100b) is arranged to be affixed to a lower peripheral edge of the vehicle (10).

5. The system of any one of claims 1-4, wherein the at least one side fairing (100a, 100b) comprises an outer surface (116) and an inner surface (114) creating the body (110) in which the plurality of rollers (140a-f) are at least partly arranged.

6. The system of any one of claims 1- 5, wherein the plurality of rollers (140) are partly protruding out of the outer surface (116) of the at least one side fairing (100a, 100b)

7. The system of any one of claims 1-5, wherein the plurality of rollers (140) are fully embedded in the body (110) of the at least one side fairing (100a, 100b).

8. The system of any one of claims 1-7, wherein the vehicle (10) is an electric or semi-electric vehicle having at least one battery pack (50a-f) arranged on the longitudinal side (10a, 10b) of the vehicle (10), and wherein the at least one side fairing (100a, 100b) is arranged to protect the at least one battery pack (50a-f).

9. The system of any one of claims 1-7, wherein the vehicle (10) is an hydrogen operated vehicle having at least one hydrogen storage unit (60a, 60b) arranged on the longitudinal side (10a, 10b) of the vehicle (10), and wherein the at least one side fairing (100a, 100b) is arranged to protect the at least one hydrogen storage unit (60a, 60b).

10. The system of any one of claims 1 - 9, wherein the plurality of rollers (140a-f) are cylindrical rollers.

11. The system of any one of claims 1 - 10, wherein the plurality of rollers (140a-f) are made of hard rubber, steel or hard plastic.

12. The system of any one of claims 1-11, wherein the plurality of rollers (140a-f) are configured to rotate upon an external impact force.

13. A vehicle (10) comprising a chassis fairing system, the chassis fairing system comprising at least one side fairing (100a, 100b) affixed to a longitudinal side (10a, 10b) of the vehicle (10), and a plurality of vertically arranged rollers (140a-f) being at least partly embedded in the at least one side fairing (100a, 100b).

14. The vehicle (10) according to claim 13, further comprises at least one battery pack (50a-f) arranged on the longitudinal side (10a, 10b) of the vehicle (10) and wherein the at least one side fairing (100a, 100b) is arranged to protect said at least one battery pack (50a-f).

15. The vehicle (10) according to claim 13 or 14, wherein the vehicle (10) is a truck.
